(19) **Europäisches Patentamt / European Patent Office / Office européen des brevets**

(11) **EP 4 770 237 A2**

(12) # EUROPEAN PATENT APPLICATION

(43) Date of publication:
**01.07.2026 Bulletin 2026/27**

(21) Application number: **26152105.8**

(22) Date of filing: **12.08.2019**

(51) International Patent Classification (IPC):
***H04W 72/12*** *(2023.01)*

(52) Cooperative Patent Classification (CPC):
**H04W 40/246; H04W 28/082; H04W 72/12;**
H04W 72/0446; H04W 72/0453; H04W 84/12;
Y02D 30/70

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.08.2018 CN 201810998104**

(62) Document number(s) of the earlier application(s) in accordance with Art. 76 EPC:
**19855529.4 / 3 840 501**

(71) Applicant: **Huawei Technologies Co., Ltd.**
**Shenzhen, Guangdong 518129 (CN)**

(72) Inventors:
- **GUO, Yuchen**
  **Shenzhen, Guangdong, 518129 (CN)**

- **YANG, Xun**
  **Shenzhen, Guangdong, 518129 (CN)**

(74) Representative: **MERH-IP Matias Erny Reichl Hoffmann**
**Patentanwälte PartG mbB**
**Paul-Heyse-Straße 29**
**80336 München (DE)**

Remarks:
- This application was filed on 15/01/2026 as a divisional application to the application mentioned under INID code 62.
- Claims filed after the date of receipt of the divisional application (Rule 68(4) EPC).

(54) **FRAME TRANSMISSION METHOD AND DEVICE**

(57) This application provides a frame transmission method and a device. The method includes: generating, by a first device, a first frame, where the first frame carries indication information, and the indication information is used to indicate radio operation parameters of a first band; and sending, by the first device, the first frame to a second device in a second band. The method is applicable to scheduling, in a band, a radio resource in another band in a multiband communications system.

FIG. 2

## Description

This application claims priority to Chinese Patent Application No. 201810998104.4, filed with the China National Intellectual Property Administration on August 29, 2018 and entitled "FRAME TRANSMISSION METHOD AND DEVICE", which is incorporated herein by reference in its entirety.

## TECHNICAL FIELD

This application relates to the field of communications technologies, and in particular, to a frame transmission method and a device.

## BACKGROUND

In an existing wireless local area network (wireless local area network, WLAN), a part of network devices, for example, a network device including a plurality of access points (access point, AP), may communicate with a plurality of terminals such as stations (station, STA) in a plurality of bands, to meet a high throughput (high throughput, HT) service requirement. Each AP corresponds to one band, and a corresponding basic service set (basic service set, BSS) is configured for the AP. Different terminals may communicate with respective corresponding APs in respective corresponding bands. It may be understood that, if the terminal also supports a plurality of bands, the network device may switch the terminal between different bands (namely, between different APs or between different BSSs), to balance service volumes carried in the different bands.

However, radio resource management in the different bands is separately performed based on the foregoing BSSs, and only a simple function such as switching a same STA between the different bands can be implemented. Flexibility is relatively poor. In addition, different STAs included in a same BSS access a same AP based on a contention mechanism. Therefore, when the BSS includes a relatively large quantity of STAs, a conflict may occur because a plurality of STAs simultaneously request to access the same AP, and radio resource utilization is relatively low.

## SUMMARY

This application provides a frame transmission method and a device, so that radio resources in two bands can be scheduled in one band to avoid a conflict, and resource utilization is improved.

To achieve the foregoing objective, embodiments of this application provide the following technical solutions.

According to a first aspect, a frame transmission method is provided. The method includes: generating, by a first device, a first frame, where the first frame carries indication information, and the indication information is used to indicate radio operation parameters of a first band; and then, sending, by the first device, the first frame to a second device in a second band.

According to a second aspect, a frame transmission method is provided. The method includes: receiving, by a second device in a second band, a first frame sent by a first device, where the first frame carries indication information, and the indication information is used to indicate radio operation parameters of a first band.

According to the frame transmission methods provided in the first aspect and the second aspect of this application, in a band, radio operation parameters of another band can be scheduled. That is, in the band, radio resources in the two bands can be scheduled in a unified manner, to avoid a problem that a radio resource is idle because of a conflict when a plurality of terminals simultaneously access a same network device, thereby improving radio resource utilization of the network device and the terminals.

In a possible implementation, the indication information may include indexes of the radio operation parameters. There is a one-to-one correspondence between the indexes of the radio operation parameters and the radio operation parameters of the first band.

For example, the indexes of the radio operation parameters may be carried in an operating class (Operating Class) field in the first frame.

In a possible implementation, the indication information may alternatively include a channel starting frequency and a channel index that are of the first band.

In a possible implementation, the indication information may further include a band identifier of the first band. For example, the indication information includes the indexes of the radio operation parameters and the band identifier, or includes the channel starting frequency, the channel index, and the band identifier that are of the first band.

In a possible implementation, the first frame may include a beacon (beacon), an explorer frame, and a response frame. The response frame may be an association response frame, or may be a reassociation response frame. This is not limited in this application.

Optionally, the first frame may be the response frame. For example, when the second device is powered on or enters coverage of the first device, the second device first needs to access the first device, and then can receive a service provided by the first device. Therefore, the second device first needs to send a request frame to the first device. To be specific, before the receiving, by a second device in a second band, a first frame sent by a first device, the second device sends the request frame to the first device in the second band. Correspondingly, before the first device generates the first frame, the first device receives, in the second band, the request frame sent by the second device. The request frame is used to obtain the radio operation parameters of the first band.

According to a third aspect, a frame transmission method is provided. The method includes: generating, by a third device, a second frame, where the second frame includes a high efficiency operation information element (high efficiency operation element) field, the high efficiency operation information element is used to carry indication information of a primary channel in a third band, and the indication information is used to indicate radio operation parameters of the primary channel; and then, sending, by the third device, the second frame to a fourth device in the third band.

According to a fourth aspect, a frame transmission method is provided. The method includes: receiving, by a fourth device in a third band, a second frame sent by a third device, where the second frame includes a high efficiency operation information element, the high efficiency operation information element is used to carry indication information of a primary channel in the third band, and the indication information is used to indicate radio operation parameters of the primary channel.

According to the frame transmission methods provided in the third aspect and the fourth aspect of this application, the high efficiency operation information element in the second frame can be used to carry the indication information of the primary channel in the third band, so that a problem that in a next-generation Wi-Fi protocol, the second frame no longer includes a high throughput operation element (high throughput operation element) field, and therefore, the high throughput operation information element cannot be used to deliver the radio operation parameters of the primary channel in the third band is resolved, and reliability of a next-generation Wi-Fi system can be improved.

In a possible implementation, the indication information may include indexes of the radio operation parameters of the primary channel in the third band.

In another possible implementation, the indication information may include a starting frequency and a channel index that are of the primary channel.

Optionally, the second frame may not include the high throughput operation information element. For example, it is stipulated in the next-generation Wi-Fi protocol such as 802.11ax that a radio frame no longer includes the high throughput operation information element.

For example, the second frame may include a beacon, an explorer frame, and a response frame. The response frame may be an association response frame, or may be a reassociation response frame. This is not limited in this application.

Optionally, the second frame may be the response frame. Similar to the frame transmission methods in the first aspect and the second aspect, when the fourth device is powered on or re-enters coverage of the third device, before the receiving, by a fourth device in a third band, a second frame sent by a third device, the fourth device further needs to send a request frame to the third device in the third band. Correspondingly, before the third device generates the second frame, the third device also needs to receive, in the third band, the request frame sent by the fourth device. The request frame is used to obtain the radio operation parameters of the third band.

According to a fifth aspect, a frame transmission method is provided. The method includes: generating, by a fifth device, a third frame, where the third frame carries indication information, and the indication information is used to indicate radio operation parameters of a fourth band in a target wakeup time (target wakeup time, TWT) scenario or a restricted access window (restricted access window, RAW) scenario; and then, sending, by the fifth device, the third frame to a sixth device in a fifth band.

According to a sixth aspect, a frame transmission method is provided. The method includes: receiving, by a sixth device in a fifth band, a third frame sent by a fifth device, where the third frame carries indication information, and the indication information is used to indicate radio operation parameters of a fourth band in a target wakeup time TWT scenario or a restricted access window RAW scenario.

According to the frame transmission methods provided in the fifth aspect and the sixth aspect of this application, in a band, radio operation parameters of another band in the TWT scenario or the RAW scenario can be scheduled. That is, in the band, radio resources in the two bands can be scheduled in a unified manner, to avoid a problem that a radio resource is idle because of a conflict when a plurality of terminals simultaneously access a same network device, and radio resource utilization of the network device and the terminals can be improved.

In a possible implementation, the indication information may include indexes of the radio operation parameters.

For example, the indexes of the radio operation parameters may be carried in an operating class field in the third frame.

Optionally, the indication information may further include a band identifier of the fourth band.

In another possible implementation, the indication information may include a channel index of at least one channel in the fourth band.

Optionally, the channel index of the at least one channel is carried in a channel index (channel index) field in the third frame.

In a possible implementation, after the fifth device sends the third frame to the sixth device in the fifth band, the fifth device may communicate with the sixth device in the fourth band and the fifth band.

Optionally, the third frame further carries a TWT wakeup time period. Specifically, that the fifth device communicates with the sixth device in the fourth band and the fifth band may include: The fifth device communicates with the sixth device only in the TWT wakeup time period in the fourth band. For example, the TWT wakeup time period may include one or more symbols, one or more slots, and one or more subframes. This is not limited in this application.

Optionally, the third frame may further carry a RAW group(s) and a RAW time window(s). The RAW group(s) and the RAW time window(s) are in a one-to-one correspondence, and the sixth device belongs to the RAW group. For example, that the fifth device communicates with the sixth device in the fourth band and the fifth band may include: For the fifth device, if the sixth device successfully accesses the fifth device in a contention manner in the RAW time window in the fourth band, the fifth device receives, in the RAW time window in the fourth band, a data frame sent by the sixth device; and correspondingly, for the sixth device, if the sixth device successfully accesses the fifth device in a contention manner in the RAW time window in the fourth band, the sixth device sends the data frame to the fifth device in the RAW time window in the fourth band.

In a possible implementation, the fifth device may include a first access point AP module, and the sixth device may include a first station STA module. For example, the sending, by the fifth device, the third frame to a sixth device in a fifth band may include: sending, by the first AP module, the third frame to the first STA module in the fifth band. Correspondingly, the receiving, by a sixth device in a fifth band, a third frame sent by a fifth device may include: receiving, by the first STA module in the fifth band, the third frame sent by the first AP module.

Optionally, if both the first AP module and the first STA module can support a plurality of bands, for the fifth device and the sixth device, after the first AP module and the first STA module complete transmission of the third frame in the fifth band, the method may further include: communicating, by the first AP module, with the first STA module in the fourth band and the fifth band.

Optionally, the fifth device further includes a second AP module, and the sixth device further includes a second STA module. Alternatively, the first AP module and the first STA module may support a band, and the second AP module and the second STA module support another band, so that multiband communication is implemented between the fifth device and the sixth device. Specifically, after the first AP module and the first STA module complete transmission of the third frame in the fifth band, the method may further include: communicating, by the first AP module, with the first STA module in the fifth band; and communicating, by the second AP module, with the second STA module in the fourth band.

In a possible implementation, the third frame may include a beacon, an explorer frame, and a response frame.

Optionally, if the third frame is the response frame, for the fifth device, before the fifth device generates the third frame, the method may further include: receiving, by the fifth device in the fifth band, a request frame sent by the sixth device. Correspondingly, for the sixth device, before the receiving, by a sixth device in a fifth band, a third frame sent by a fifth device, the method may further include: sending, by the sixth device, the request frame to the fifth device in the fifth band. The request frame is used to obtain the radio operation parameters of the fourth band.

According to a seventh aspect, a frame transmission method is provided. The method includes: generating, by a seventh device, a fourth frame, where the fourth frame carries indication information, the indication information is used to indicate a transmission time period scheduled for an eighth device in a time division multiple access TDMA scenario, and the transmission time period is used by the seventh device to receive a data frame sent by the eighth device; then, sending, by the seventh device, the fourth frame to the eighth device; and then, sending, by the seventh device, a data frame in the transmission time period if the seventh device does not receive, in the transmission time period, the data frame sent by the eighth device.

According to an eighth aspect, a frame transmission method is provided. The method includes: receiving, by an eighth device, a fourth frame sent by a seventh device, where the fourth frame carries indication information, the indication information is used to indicate a transmission time period scheduled for the eighth device in a time division multiple access TDMA scenario, and the transmission time period is used by the eighth device to send a data frame to the seventh device.

According to the frame transmission methods provided in the seventh aspect and the eighth aspect of this application, whether a TDMA transmission time period in a direction such as an uplink direction is idle can be monitored, and when the TDMA transmission time period is idle, the TDMA transmission time period is used for data transmission in another direction opposite to the foregoing direction, to avoid a case in which the TDMA transmission time period is idle because no data needs to be transmitted, and improve utilization of an idle TDMA transmission time period, thereby improving radio resource utilization.

In a possible implementation, the transmission time period includes a first time period and a second time period, and the second time period is later than the first time period.

For example, for the seventh device, the sending, by the seventh device, a data frame in the transmission time period if the seventh device does not receive, in the transmission time period, the data frame sent by the eighth device may include:

sending, by the seventh device, the data frame in the second time period if the seventh device does not receive, in the first time period, the data frame sent by the eighth device.

Correspondingly, for the eighth device, after the receiving, by an eighth device, a fourth frame sent by a seventh device, the method may further include:

receiving, by the eighth device, in the second time period if the eighth device does not send the data frame to the seventh device in the first time period, the data frame sent by the seventh device.

Optionally, the transmission time period may further include a third time period, and the third time period is later than the second time period. For example, for the seventh device, after the sending, by the seventh device, the data frame in the second time period, the method may further include: receiving, by the seventh device in the third time period, an acknowledgement frame of the data frame sent by the seventh device in the second time period. Correspondingly, for the eighth device, after the receiving, by the eighth device, in the second time period, the data frame sent by the seventh device, the method may further include: sending, by the eighth device in the third time period to the seventh device, the acknowledgement frame of the data frame sent by the seventh device in the second time period.

It may be understood that the sending, by the seventh device, the data frame in the second time period may be sending, by the seventh device, the data frame to the eighth device in the second time period, or may be sending, by the seventh device, the data frame to another device other than the eighth device in the second time period. This is not limited in this application.

For example, in the first aspect to the eighth aspect, the first device, the third device, the fifth device, and the seventh device may usually be network devices such as an AP and a relay (relay) in a Wi-Fi system, and the second device, the fourth device, the sixth device, and the eighth device may usually be terminals such as a station and a relay in the Wi-Fi system. For example, the network device may be an AP or a relay, and the terminal may be a STA. For another example, the network device may be an AP, and the terminal may be a STA and/or a relay. For still another example, the network device may be a terminal in a main controlling position, for example, a mobile phone providing a Wi-Fi hotspot, and the terminal may be another terminal accessing the Wi-Fi hotspot.

It should be noted that the frame transmission methods in the first to the eighth aspects may alternatively be applicable to another wireless communications system, for example, a long term evolution (long term evolution, LTE) system and a new radio (new radio, NR) system. Correspondingly, the network device may be an evolved NodeB (evolved NodeB, eNB) or a gNB, and the terminal may be a mobile phone or a tablet computer that supports LTE or NR.

According to a ninth aspect, a communications apparatus is provided. The communications apparatus serves as a first device to communicate with a second device. The communications apparatus includes a generation module and a communications module.

The generation module is configured to generate a first frame, where the first frame carries indication information, and the indication information is used to indicate radio operation parameters of a first band.

The communications module is configured to send the first frame to the second device in a second band.

In a possible implementation, the indication information includes indexes of the radio operation parameters.

Optionally, the indexes of the radio operation parameters are carried in an operating class field in the first frame.

In another possible design, the indication information includes a channel starting frequency and a channel index that are of the first band.

Optionally, the indication information may further include a band identifier of the first band.

For example, the first frame includes a beacon, an explorer frame, and a response frame.

Optionally, the first frame is the response frame.

The communications module is further configured to receive, in the second band, a request frame sent by the second device, where the request frame is used to obtain the radio operation parameters of the first band.

According to a tenth aspect, a communications apparatus is provided. The communications apparatus serves as a second device to communicate with a first device. The communications apparatus includes a communications module.

The communications module is configured to receive, in a second band, a first frame sent by a first device, where the first frame carries indication information, and the indication information is used to indicate radio operation parameters of a first band.

In a possible implementation, the indication information includes indexes of the radio operation parameters.

Optionally, the indexes of the radio operation parameters are carried in an operating class field in the first frame.

In another possible design, the indication information includes a channel starting frequency and a channel index that are of the first band.

Optionally, the indication information further includes a band identifier of the first band.

In a possible implementation, the first frame includes a beacon, an explorer frame, and a response frame.

Optionally, the first frame is the response frame. The communications module is further configured to send a request frame to the first device in the second band, where the request frame is used to obtain the radio operation parameters of the first band.

According to an eleventh aspect, a communications apparatus is provided. The communications apparatus serves as a third device to communicate with a fourth device. The communications apparatus includes a generation module and a communications module.

The generation module is configured to generate a second frame, where the second frame includes a high efficiency operation element field, the high efficiency operation element field is used to carry indication information of a primary channel in a third band, and the indication information is used to indicate radio operation parameters of the primary channel.

The communications module is configured to send the second frame to a fourth device in the third band.

In a possible implementation, the indication information includes indexes of the radio operation parameters.

In another possible design, the indication information includes a starting frequency and a channel index that are of the primary channel.

Optionally, the second frame does not include a high throughput operation element field.

For example, the second frame includes a beacon, an explorer frame, and a response frame.

Optionally, the second frame is the response frame. The communications module is further configured to receive, in the third band, a request frame sent by the fourth device, where the request frame is used to obtain the radio operation parameters of the primary channel.

According to a twelfth aspect, a communications apparatus is provided. The communications apparatus serves as a fourth device to communicate with a third device. The communications apparatus includes a communications module.

The communications module is configured to receive, in a third band, a second frame sent by a third device, where the second frame includes a high efficiency operation element field, the high efficiency operation element field is used to carry indication information of a primary channel in the third band, and the indication information is used to indicate radio operation parameters of the primary channel.

In a possible implementation, the indication information includes indexes of the radio operation parameters.

In another possible design, the indication information includes a starting frequency and a channel index that are of the primary channel.

Optionally, the second frame does not include a high throughput operation element field.

For example, the second frame includes a beacon, an explorer frame, and a response frame.

Optionally, the second frame is the response frame. The communications module is further configured to send a request frame to the third device in the third band, where the request frame is used to obtain the radio operation parameters of the primary channel.

According to a thirteenth aspect, a communications apparatus is provided. The communications apparatus serves as a fifth device to communicate with a sixth device. The communications apparatus includes a generation module and a communications module.

The generation module is configured to generate a third frame, where the third frame carries indication information, and the indication information is used to indicate radio operation parameters of a fourth band in a target wakeup time TWT scenario or a restricted access window RAW scenario.

The communications module is configured to send the third frame to a sixth device in a fifth band.

In a possible implementation, the indication information includes indexes of the radio operation parameters.

Optionally, the indexes of the radio operation parameters are carried in an operating class field in the third frame.

Optionally, the indication information further includes a band identifier of the fourth band.

In another possible design, the indication information includes a channel index of at least one channel in the fourth band.

Optionally, the channel index of the at least one channel is carried in a channel index field in the third frame.

In a possible implementation, the communications module is further configured to communicate with the sixth device in the fourth band and the fifth band.

Optionally, the third frame further carries a TWT wakeup time period. The communications module is further configured to communicate with the sixth device only in the TWT wakeup time period in the fourth band.

Optionally, the third frame further carries a RAW group(s) and a RAW time window(s). The RAW group(s) and the RAW time window(s) are in a one-to-one correspondence, and the sixth device belongs to the RAW group. The communications module is further configured to: if the sixth device successfully accesses the communications apparatus in a contention manner in the RAW time window in the fourth band, receive, in the RAW time window in the fourth band, a data frame sent by the sixth device.

In a possible implementation, the communications module includes a first access point AP module, and the sixth device includes a first station STA module.

The first AP module is configured to send the third frame to the first STA module in the fifth band.

Optionally, the first AP module is further configured to communicate with the first STA module in the fourth band and the fifth band.

Optionally, the communications module further includes a second AP module, and the sixth device further includes a second STA module.

The first AP module is further configured to communicate with the first STA module in the fifth band.

The second AP module is configured to communicate with the second STA module in the fourth band.

For example, the third frame includes a beacon, an explorer frame, and a response frame.

Optionally, the third frame is the response frame. The communications module is further configured to receive, in the fifth band, a request frame sent by the sixth device, where the request frame is used to obtain the radio operation parameters of the fourth band.

According to a fourteenth aspect, a communications apparatus is provided. The communications apparatus serves as a sixth device to communicate with a fifth device. The communications apparatus includes a communications module.

The communications module is configured to receive, in a fifth band, a third frame sent by a fifth device, where the third frame carries indication information, and the indication information is used to indicate radio operation parameters of a fourth band in a target wakeup time TWT scenario or a restricted access window RAW scenario.

In a possible implementation, the indication information includes indexes of the radio operation parameters.

Optionally, the indexes of the radio operation parameters are carried in an operating class field in the third frame.

Optionally, the indication information further includes a band identifier of the fourth band.

In another possible implementation, the indication information includes a channel index of at least one channel in the fourth band.

Optionally, the channel index of the at least one channel is carried in a channel index field in the third frame.

Optionally, the communications module is further configured to communicate with the fifth device in the fourth band and the fifth band.

In a possible implementation, the third frame further carries a TWT wakeup time period. The communications module is further configured to communicate with the fifth device only in the TWT wakeup time period in the fourth band.

In another possible implementation, the third frame further carries a RAW group(s) and a RAW time window(s). The RAW group(s) and the RAW time window(s) are in a one-to-one correspondence. The communications apparatus belongs to a RAW group.

The communications module is further configured to: if the communications apparatus successfully accesses the fifth device in a contention manner in the RAW time window in the fourth band, send the data frame to the fifth device in the RAW time window in the fourth band.

In a possible implementation, the fifth device includes a first access point AP module, and the communications module includes a first station STA module.

The first STA module is configured to receive, in the fifth band, the third frame sent by the first AP module.

Optionally, the first STA module is further configured to communicate with the first AP module in the fourth band and the fifth band.

Optionally, the fifth device further includes a second AP module, and the communications apparatus further includes a second STA module.

The first STA module is further configured to communicate with the first AP module in the fifth band.

The second STA module is configured to communicate with the second AP module in the fourth band.

For example, the third frame includes a beacon, an explorer frame, and a response frame.

Optionally, the third frame is the response frame. The communications module is further configured to send a request frame to the fifth device in the fifth band, where the request frame is used to obtain the radio operation parameters of the fourth band.

According to a fifteenth aspect, a communications apparatus is provided. The communications apparatus serves as a seventh device to communicate with an eighth device. The communications apparatus includes a generation module and a communications module.

The generation module is configured to generate a fourth frame, where the fourth frame carries indication information, the indication information is used to indicate a transmission time period scheduled for an eighth device in a time division multiple access TDMA scenario, and the transmission time period is used by the communications module to receive a data frame sent by the eighth device.

The communications module is configured to send the fourth frame to the eighth device.

The communications module is further configured to send a data frame in the transmission time period if the communications module does not receive, in the transmission time period, the data frame sent by the eighth device.

In a possible implementation, the communications module is further configured to send the data frame in a second time period if the communications module does not receive, in a first time period, the data frame sent by the eighth device.

Optionally, the transmission time period further includes a third time period, and the third time period is later than the second time period. The communications module is further configured to receive, in the third time period, an acknowledgement frame of the data frame sent by the communications module in the second time period.

According to a sixteenth aspect, a communications apparatus is provided. The communications apparatus serves as an eighth device to communicate with a seventh device. The communications apparatus includes a communications module.

The communications module is configured to receive a fourth frame sent by a seventh device, where the fourth frame carries indication information, the indication information is used to indicate a transmission time period scheduled for the communications apparatus in a time division multiple access TDMA scenario, and the transmission time period is used by the communications module to send a data frame to the seventh device.

In a possible implementation, the transmission time period includes a first time period and a second time period, and the second time period is later than the first time period. The communications module is further configured to receive, in the second time period if the communications module does not send the data frame to the seventh device in the first time period, a data frame sent by the seventh device.

Optionally, the transmission time period further includes a third time period, and the third time period is later than the second time period.

The communications module is further configured to send, in the third time period to the seventh device, an acknowledgement frame of the data frame sent by the seventh device in the second time period.

According to a seventeenth aspect, a communications device is provided. The communications device includes a processor, a transceiver, and a memory. The memory is configured to store one or more programs. The one or more programs include a computer executable instruction. When the communications device runs, the processor executes the computer executable instruction stored in the memory, so that the communications device performs the frame transmission method according to any one of the first aspect to the eighth aspect or any possible implementation of any one of the first aspect to the eighth aspect.

According to an eighteenth aspect, a chip system is provided. The chip system includes a processor and a transceiver interface. The processor is configured to implement the frame transmission method according to any one of the first aspect to the eighth aspect or any possible implementation of any one of the first aspect to the eighth aspect.

According to a nineteenth aspect, a communications system is provided. The system includes the foregoing communications apparatuses and the foregoing communications device.

According to a twentieth aspect, a readable storage medium is provided, and includes a program or an instruction. When the program or the instruction is run on a computer, the computer is enabled to perform the frame transmission method according to any one of the first aspect to the eighth aspect or any possible implementation of any one of the first aspect to the eighth aspect.

According to the method provided in the embodiments of this application, a power and/or power headroom determining method in a multibeam scenario may be provided, and is applicable to power control or power headroom reporting in the multibeam scenario, for example, is applicable to power control or power headroom reporting in an NR system.

## BRIEF DESCRIPTION OF DRAWINGS

FIG. 1 is a schematic structural diagram of a communications system to which a frame transmission method according to an embodiment of this application is applicable;
FIG. 2 is a schematic flowchart of a frame transmission method 1 according to an embodiment of this application;
FIG. 3 is a schematic structural diagram of a frame in the frame transmission method 1 according to an embodiment of this application;
FIG. 4 is a schematic flowchart of a frame transmission method 2 according to an embodiment of this application;
FIG. 5 is a schematic structural diagram of a frame in the frame transmission method 2 according to an embodiment of this application;
FIG. 6 is a schematic flowchart of a frame transmission method 3 according to an embodiment of this application;
FIG. 7A is a schematic structural diagram 1 of a TWT unicast frame in the frame transmission method 3 according to an embodiment of this application;
FIG. 7B is a schematic structural diagram of a TWT broadcast frame in the frame transmission method 3 according to an embodiment of this application;
FIG. 7C is a schematic structural diagram 2 of a TWT unicast frame in the frame transmission method 3 according to an embodiment of this application;
FIG. 7D is a schematic structural diagram 1 of a RAW frame in the frame transmission method 3 according to an embodiment of this application;
FIG. 7E is a schematic structural diagram 2 of a RAW frame in the frame transmission method 3 according to an embodiment of this application;

FIG. 8 is a schematic diagram of a TWT wakeup time period in the frame transmission method 3 according to an embodiment of this application;

FIG. 9 is a schematic flowchart of a frame transmission method 4 according to an embodiment of this application;

FIG. 10 is a schematic structural diagram of a frame in the frame transmission method 4 according to an embodiment of this application;

FIG. 11 is a schematic diagram of a TDMA transmission block in the frame transmission method 4 according to an embodiment of this application;

FIG. 12 is a schematic structural diagram of a communications apparatus according to an embodiment of this application;

FIG. 13 is a schematic structural diagram of another communications apparatus according to an embodiment of this application;

FIG. 14 is a schematic structural diagram of a communications device according to an embodiment of this application;

FIG. 15 is a schematic diagram of inter-band establishment in a broadcast TWT scenario according to an embodiment of this application; and

FIG. 16 is a schematic diagram of inter-band establishment in a unicast TWT scenario according to an embodiment of this application.

## DESCRIPTION OF EMBODIMENTS

The following describes technical solutions in this application with reference to accompanying drawings.

The technical solutions in embodiments of this application may be used in various communications systems such as a wireless fidelity (wireless fidelity, Wi-Fi) system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompany drawings. In addition, a combination of these solutions may be used.

In addition, the word "example" in the embodiments of this application is used to represent giving an example, an illustration, or a description. Any embodiment or design scheme described as an "example" in this application should not be explained as being more preferred or having more advantages than another embodiment or design scheme. Exactly, "for example" is used to present a concept in a specific manner.

In the embodiments of this application, "information (information)", "signal (signal)", "message (message)", "channel (channel)", "signaling (signaling)", and "message (message)" may be interchangeably used sometimes. It should be noted that meanings expressed by the terms are consistent when differences are not emphasized. "Of (of)", "corresponding, relevant (corresponding, relevant)", and "corresponding (corresponding)" may be interchangeably used sometimes. It should be noted that meanings expressed by the terms are consistent when differences between the terms are not emphasized.

In the embodiments of this application, sometimes a subscript such as $W_1$ may be written in an incorrect form such as W1. Expressed meanings are consistent when differences are not emphasized.

A network architecture and a service scenario described in the embodiments of this application are intended to describe the technical solutions in the embodiments of this application more clearly, and do not constitute a limitation on the technical solutions provided in the embodiments of this application. A person of ordinary skill in the art may know that with evolution of the network architecture and emergence of new service scenarios, the technical solutions provided in the embodiments of this application are also applicable to similar technical problems.

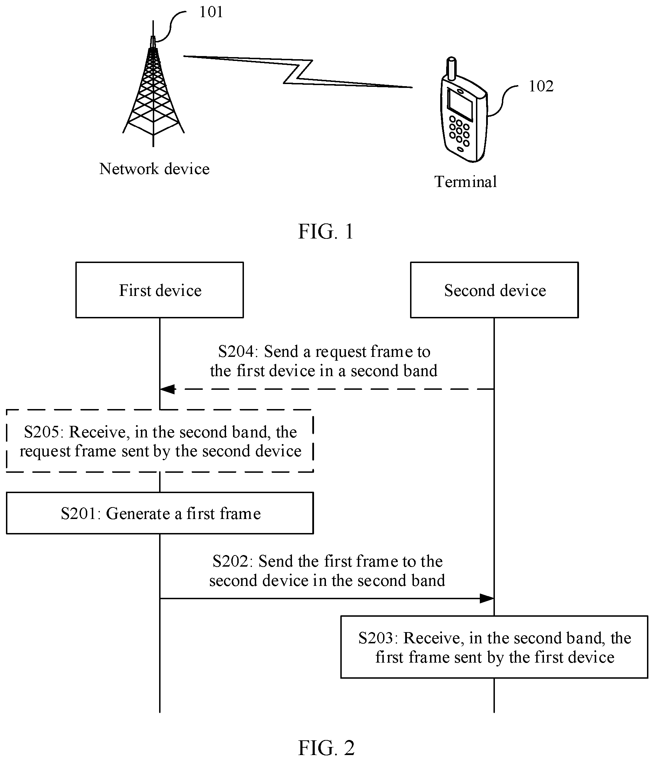

For ease of understanding the embodiments of this application, a communications system shown in FIG. 1 is first used as an example to describe in detail a communications system applicable to the embodiments of this application. FIG. 1 is a schematic structural diagram of a communications system to which a communication method according to an embodiment of this application is applicable. As shown in FIG. 1, the communications system includes a network device 101 and a terminal 102. A plurality of antennas may be configured for the network device 101, and a plurality of antennas may also be configured for the terminal 102. For example, both the network device 101 and the terminal 102 include a plurality of radio units (radio unit, RU), to control the plurality of antennas.

It should be understood that the network device 101 may further include a plurality of components (for example, a processor, a modulator, a multiplexer, a demodulator, or a demultiplexer) related to signal sending and receiving.

For example, the network device 101 may be a device having a wireless transceiver function or a chip that may be disposed in the device, for example, an access point (access point, AP) or a relay (relay) station in a wireless fidelity (wireless fidelity, Wi-Fi) system. The terminal 101 may be a station (station, STA) in the Wi-Fi system.

In the communications system shown in FIG. 1, the network device 101 may communicate with a plurality of terminals (for example, the terminal 102 shown in the figure). The network device 101 may communicate with any quantity of terminals that are similar to the terminal 102. It may be understood that the terminal 102 shown in FIG. 1 may also simultaneously communicate with one or more network devices. This is not limited in this embodiment of this application.

It should be noted that the network device may alternatively be a terminal in a main controlling position, for example, a terminal providing a Wi-Fi hotspot. It may be understood that the terminal may be a relay station, for example, a relay station that accesses the AP in the Wi-Fi system.

It should be understood that FIG. 1 is merely a simplified schematic diagram used as an example for ease of understanding. The communications system may further include another network device or another terminal, which is not shown in FIG. 1.

The following describes in detail a frame transmission method, a network device, and a terminal that are provided in the embodiments of this application.

FIG. 2 is a schematic flowchart of a frame transmission method 1 according to an embodiment of this application. As shown in FIG. 2, the method includes S201 to S203.

S201: A first device generates a first frame.

The first frame carries indication information. The indication information is used to indicate radio operation parameters of a first band.

In this embodiment of this application, the radio operation parameters are used to determine a radio resource in the first band. The radio resource may include a frequency domain resource, a time domain resource, and a space domain resource.

The time domain resource includes but is not limited to at least one symbol (symbol), at least one slot (slot), at least one short slot (short slot), at least one subframe (subframe), at least one radio frame (frame), and the like that are included in the radio resource.

The space domain resource may include but is not limited to an antenna port (antenna port) on which the radio resource is located, a precoding matrix (precoding matrix) in which the radio resource is located, and the like.

The frequency domain resource may include but is not limited to a band starting frequency (band starting frequency), a central frequency (central frequency), and a frequency domain bandwidth that are of the radio resource in the first band, a channel set (channel set) included in the first band, and the like. The channel set may include one primary channel and zero, one, or more secondary channels (secondary channel). The primary channel and the secondary channel may be determined by respective parameters such as a channel starting frequency (channel starting frequency), a channel index (channel index), and a channel spacing (channel spacing, namely, a minimum channel bandwidth).

In a possible implementation, an indication or an index may also be set for each of a plurality of radio operation parameter sets used to determine the radio resource, for example, an operating class (Operating Class) index shown in the first column of Table 1 and Table 2.

Then, the indication or the index may be transmitted through a first field in the first frame, for example, an operating class field in the first frame. An operating class may be used to indicate a channel starting frequency. The operating class may be further used to indicate channel information included in a channel set at a 6 GHz band. The operating class index, a primary channel field, and a segment 0 (for example, the first 80 MHz of a 160 MHz band) and a segment 1 (for example, the second 80 MHz of the 160 MHz band) of a central frequency of a channel may jointly specify the central frequency of the channel at the 6 GHz band.

Then, a corresponding radio operation parameter set may be indirectly determined based on the operating class index, and a radio resource is determined based on the radio operation parameter set, to reduce an amount of data that needs to be carried in signaling delivered during radio resource scheduling.

For example, Table 1 and Table 2 show a correspondence, applicable to the United States, between radio operation parameter sets and operating class indexes of the radio operation parameter sets. As shown in Table 1 and

Table 2, the first to the fifth columns are successively an operating class, a global operating class, a channel starting frequency, a channel interval, and a channel set.

For example, a radio operation parameter set shown in a row in which an operating class is 134 in Table 2 corresponds to frequency domain resources including a channel starting frequency 5.94 gigahertz (gigahertz, GHz), a channel spacing 160 MHz, and included channels that are a total of seven channels whose channel indexes are 15, 47, 79, 111, 143, 175, and 207.

**Table 1**

| Operating class | Global operating class | Channel starting frequency (GHz) | Channel spacing (MHz) | Channel set |
|---|---|---|---|---|
| 1 | 115 | 5 | 20 | 36, 40, 44, and 48 |
| 2 | 118 | 5 | 20 | 52, 54, 60, and 64 |

(continued)

| Operating class | Global operating class | Channel starting frequency (GHz) | Channel spacing (MHz) | Channel set |
|---|---|---|---|---|
| ... | ... | ... | ... | ... |
| 6 | 103 | 4.9375 | 5 | 1, 2, 3, 4, 5, 6, 7, 8, 9, and 10 |
| ... | ... | ... | ... | ... |
| 8 | 102 | 4.89 | 10 | 11, 13, 15, 17, and 19 |
| ... | ... | ... | ... | ... |
| 10 | 101 | 4.85 | 20 | 21 and 25 |
| ... | ... | ... | ... | ... |
| 131 | | 5.940 | 20 | 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, and 233 |

**Table 2**

| Operating class | Global operating class | Channel starting frequency (GHz) | Channel spacing (MHz) | Channel set |
|---|---|---|---|---|
| 132 | | 5.940 | 40 | 3, 11, 19, 27, 35, 43, 51, 59, 67, 75, 83, 91, 99, 107, 115, 123, 131, 139, 147, 155, 163, 171, 179, 187, 195, 203, 211, 219, and 227 |
| 133 | | 5.940 | 80 | 7, 23, 39, 55, 71, 87, 103, 119, 135, 151, 167, 183, 199, and 215 |
| 134 | | 5.940 | 160 | 15, 47, 79, 111, 143, 175, and 207 |

A Wi-Fi technology such as 802.11ac may support a 2.4 GHz band and a 5 GHz band. A next-generation Wi-Fi technology such as 802.11ax may support the 6 GHz band in addition to the 2.4 GHz band and the 5 GHz band, to meet increasing requirements for a high throughput data rate.

In the Wi-Fi technology, a correspondence between radio operation parameter sets and band operation indexes of the radio operation parameter sets may be set, and is used in a process of scheduling a radio resource at the 6 GHz band.

Therefore, in a possible implementation, the indication information may include indexes of the radio operation parameters shown in Table 1 and Table 2. There is a one-to-one correspondence between the indexes of the radio operation parameters and the radio operation parameters of the first band.

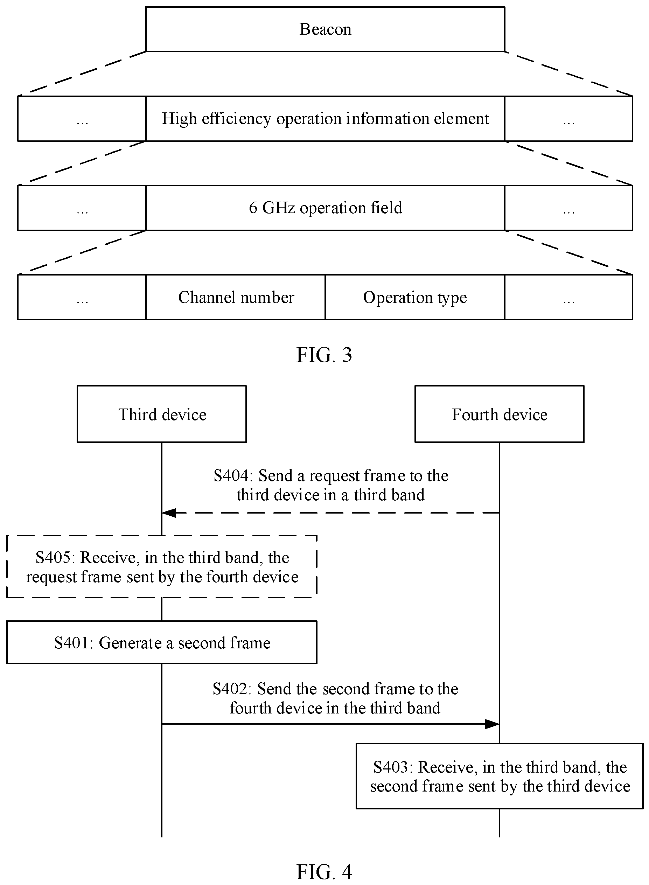

For example, the first frame may be a beacon shown in FIG. 3. As shown in FIG. 3, the beacon includes a high efficiency operation information element (HE operation element) field. The high efficiency operation information element includes a 6 GHz operation field (6 GHz operation field). The 6 GHz operation field field includes a channel number (Channel Number) field and an operating class (Operating Class) field. In this embodiment of this application, the operating class such as the operating class or the global operating class in Table 1 and Table 2 may be carried in the operating class field in the beacon shown in FIG. 3. Optionally, the operating class may alternatively be directly carried in the 6 GHz operation field field shown in FIG. 3.

It may be understood that, in addition to the operating class, as shown in FIG. 3, the channel indexes shown in the channel set column in Table 1 and Table 2 may also be carried in the channel number field.

In another possible implementation, a parameter that can be used to determine the radio resource may also be delivered. In view of this, the indication information may also include a channel starting frequency and a channel index that are of the first band. A terminal side may determine a central frequency of the radio resource according to the following formula:

$$f_c = f_{start} + 5 \times c_{idx}$$

where $f_c$ is a central frequency, $f_{start}$ is the channel starting frequency, $c_{idx}$ is the channel index, and $f_{start}$ may be a preset value.

Optionally, the indication information may further include a band identifier of the first band. For example, the indication information includes indexes of the radio operation parameters and the band identifier, or includes the channel starting frequency, the channel index, and the band identifier that are of the first band. Details are not described again in this embodiment of this application.

Optionally, a second device may also learn of a location of the first band by using a predefined frequency reference point. Specifically, the second device determines an offset of the first band relative to the frequency reference point based on the channel index. Alternatively, the location of the first band may be obtained by adding an offset corresponding to the channel index to the frequency reference point.

In a possible implementation, the first frame may include a beacon (beacon), an explorer frame, and a response frame. The response frame may be an association response frame, or may be a reassociation response frame. This is not limited in this application. Because the beacon, the explorer frame, and the response frame all belong to the prior art, details are not described in this embodiment of this application.

S202: The first device sends the first frame to the second device in a second band.

Specifically, the first device sends the first frame to the second device on the radio resource, determined in S201, of the first band.

S203: The second device receives, in the second band, the first frame sent by the first device.

Then, the second device may complete configuration of the second device based on the indication information carried in the first frame, and communicate with the first device in the first band.

It may be understood that, when the second device communicates with the first device in the first band, the second device may also communicate with the first device in the second band, to further improve, by using a multiband technology, a data throughput of communication between the first device and the second device.

Optionally, the first frame may be the response frame. For example, when the second device is powered on or enters coverage of the first device, the second device first needs to access the first device in the second band, and then can receive a service provided by the first device and receive, in the second band, the indication information, delivered by the first device, of the first band. Therefore, as shown in FIG. 2, the second device first needs to send a request frame to the first device. To be specific, for the second device, before S203 in which the second device receives, in the second band, the first frame sent by the first device, the frame transmission method may further include S204 and S205.

S204: The second device sends the request frame to the first device in the second band.

The request frame is used to obtain the radio operation parameters of the first band.

S205: The first device needs to receive, in the second band, the request frame sent by the second device.

Optionally, the request frame may carry radio operation parameters of at least one candidate radio resource in the first band. Correspondingly, the first device may schedule a radio resource at a first frequency for the second device from the at least one candidate radio resource, or may ignore the candidate radio resource and directly schedule a radio resource at a first frequency for the second device.

Optionally, the request frame may alternatively carry no radio operation parameter of any candidate radio resource. Correspondingly, the first device may schedule a radio resource in the first band for the second device based on scheduling statuses of all radio resources in the first band and a service requirement of the second device.

During actual application, in addition to the scenario in S204, the first device may alternatively directly broadcast the indication information of the first band to all second devices that have accessed the first device. That is, S204 and S205 are both optional steps, and therefore are represented by dashed lines in FIG. 2.

According to the frame transmission method shown in FIG. 2 in this embodiment of this application, in a band, radio operation parameters of another band can be scheduled. That is, in the band, radio resources in the two bands can be scheduled in a unified manner, to avoid a problem that a radio resource is idle because of a conflict when a plurality of terminals simultaneously access a same network device, thereby improving radio resource utilization of the network device and the terminals.

FIG. 4 is a schematic flowchart of a frame transmission method 2 according to an embodiment of this application. As shown in FIG. 4, the method includes S401 to S403.

S401: A third device generates a second frame.

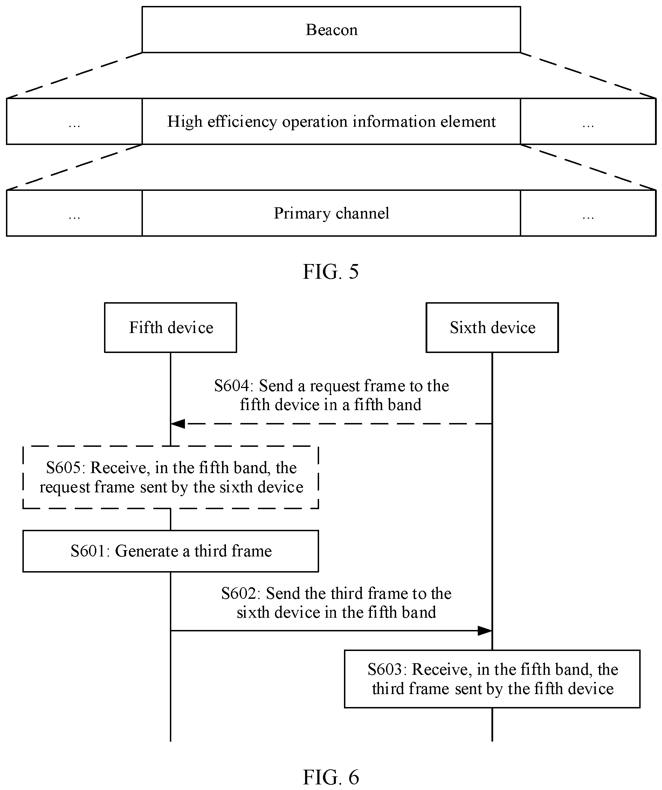

As shown in FIG. 5, in this embodiment of this application, the second frame includes a high efficiency operation information element. The high efficiency operation information element may include a primary channel field. The primary channel field may be used to carry indication information of a primary channel in a third band. The indication information is used to indicate radio operation parameters, for example, a channel number or a channel index, of the primary channel.

It may be understood that, the frame transmission method provided in this embodiment of this application does not depend on whether the second frame includes a high throughput operation information element, so that a problem that in a process of formulating a next-generation Wi-Fi protocol, the second frame may no longer include the high throughput operation information element, and therefore, the high throughput operation information element cannot be used to carry channel information of the primary channel can be resolved. It may be understood that the second frame may no longer include the high throughput operation information element.

In a possible implementation, the indication information may include the indexes, shown in Table 1 and Table 2, of the radio operation parameters of the primary channel in the third band.

In another possible implementation, the indication information may include a starting frequency and the channel index that are of the primary channel.

For example, the second frame may include a beacon, an explorer frame, and a response frame. The response frame may be an association response frame, or may be a reassociation response frame. This is not limited in this application.

S402: The third device sends the second frame to a fourth device in the third band.

S403: The fourth device receives, in the third band, the second frame sent by the third device.

Then, the fourth device may complete configuration of the fourth device based on the indication information carried in the second frame, and communicate with the third device in the third band.

Optionally, the second frame may be the response frame. For example, similar to the frame transmission methods in the first aspect and the second aspect, when the fourth device is powered on or re-enters coverage of the third device, the frame transmission method shown in FIG. 4 may further include S404 and S405 (represented by dashed lines in FIG. 4).

S404: The fourth device sends a request frame to the third device in the third band.

S405: The third device receives, in the third band, the request frame sent by the fourth device, where the request frame is used to obtain the radio operation parameters of the third band.

Because S404 and S405 are similar to S204 and S205, details are not described in this embodiment of this application again.

According to the frame transmission method shown in FIG. 4 in this embodiment of this application, the high efficiency operation information element in the second frame can be used to carry the indication information of the primary channel in the third band, so that a problem that in a next-generation Wi-Fi protocol, the second frame no longer includes the high throughput operation information element, and therefore, the high throughput operation information element cannot be used to deliver the radio operation parameters of the primary channel in the third band is resolved, and reliability of a next-generation Wi-Fi system can be improved.

FIG. 6 is a schematic flowchart of a frame transmission method 3 according to an embodiment of this application. As shown in FIG. 6, the method includes S601 to S603.

S601: A fifth device generates a third frame.

The third frame carries indication information. The indication information is used to indicate radio operation parameters of a fourth band in a target wakeup time TWT scenario, or is used to indicate radio operation parameters of a fourth band in a restricted access window RAW scenario.

In a possible implementation, the indication information may include indexes of the radio operation parameters. For example, the indexes of the radio operation parameters may be the operating class index or the global operating class index shown in Table 1 and Table 2.

Optionally, the indication information may further include a band identifier of the fourth band. The band identifier may be used to indicate a predefined band, and the predefined band may include a relatively small band. For example, as shown in Table 3, a band identifier whose value is 2 corresponds to a predefined 2.4 GHz band. Therefore, when a third party carries the band identifier whose value is 2, a terminal only needs to perform frequency scanning and network searching within a 2.4 GHz band range, so that a band range in a frequency scanning and network searching process of the terminal can be narrowed, and search efficiency is improved.

Certainly, an existing Wi-Fi protocol does not support a 6 GHz band. To meet a data transmission requirement of a higher throughput, the 6 GHz band may be introduced into a next-generation Wi-Fi protocol such as 802.11ax. For example, as shown in Table 3, a band identifier of the 6 GHz band may be defined as 6. It should be noted that a band identifier, defined in the next-generation Wi-Fi protocol, of the 6 GHz band may be different from that in Table 3. For example, a value of the band identifier of the 6 GHz band may not be 6. For another example, a band range included in a band whose band identifier is 6 may include only a part of the 6 GHz band, or may include another band, for example, a 7 GHz band, besides the 6 GHz band. This is not limited in this embodiment of this application.

Table 3

| Band identifier | Meaning |
|---|---|
| 0 | Band corresponding to TV white space |

(continued)

| Band identifier | Meaning |
|---|---|
| 1 | Band less than 1 GHz and other than the band corresponding to the TV white space |
| 2 | 2.4 GHz band |
| 3 | 3.6 GHz band |
| 4 | 4.9 GHz band and 5 GHz band |
| 5 | 60 GHz band |
| 6 | 6 GHz band |
| 7-255 | Reserved |

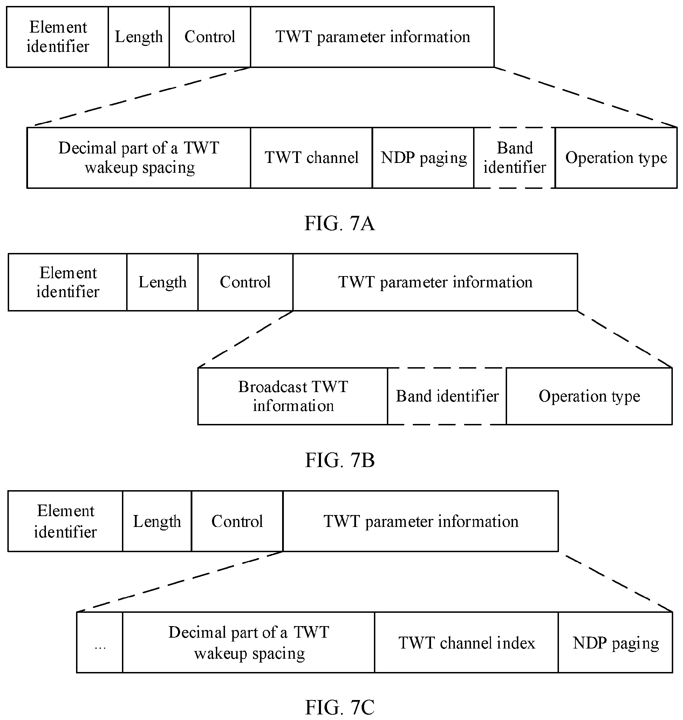

Optionally, as shown in FIG. 7A or FIG. 7B, both the TWT unicast frame and the TWT broadcast frame may further include a band ID field, used to carry the band identifier of the fourth band. Because the band ID field is optional, the band ID field is represented by using a dashed-line box in FIG. 7A and FIG. 7B.

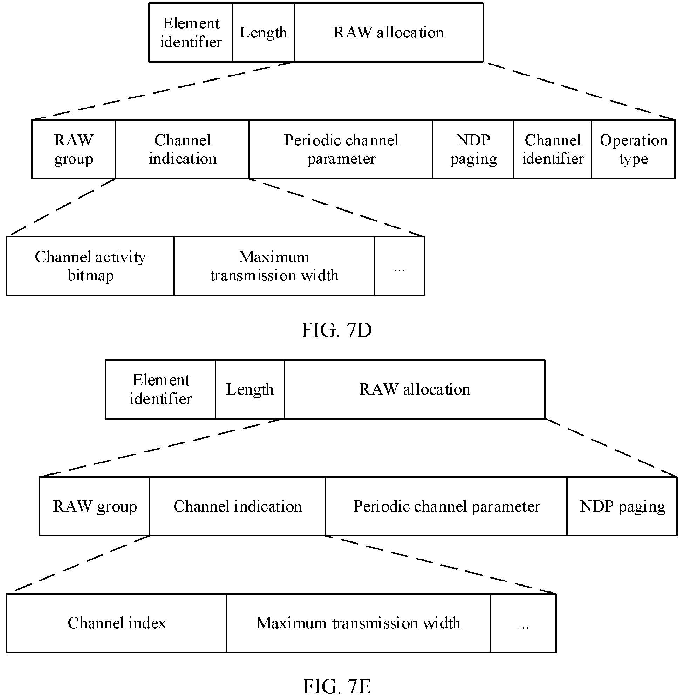

In the RAW scenario, the third frame may be a RAW frame shown in FIG. 7D. As shown in FIG. 7D, the RAW frame includes an operating class field, used to carry the indexes of the radio operation parameters.

Optionally, as shown in FIG. 7D, the RAW frame may further include a band ID field, used to carry the band identifier of the fourth band. Because the band ID field is optional, the band ID field is represented by using a dashed-line box in FIG. 7D.

In another possible implementation, the indication information includes a channel index of at least one channel in the fourth band. The channel index may be at least one channel index in the channel sets shown in Table 1 and Table 2.

For example, in a unicast TWT scenario, the third frame may be a TWT unicast frame shown in FIG. 7C. As shown in FIG. 7C, the TWT unicast frame reuses a TWT channel field in an existing TWT unicast frame, and is renamed as a TWT channel index field, used to carry the channel index of the at least one channel.

For example, in the RAW scenario, the third frame may be a RAW frame shown in FIG. 7E. As shown in FIG. 7E, a channel index field in the RAW frame is used to carry the channel index of the at least one channel.

S602: The fifth device sends the third frame to a sixth device in a fifth band.

S603: The sixth device receives, in the fifth band, the third frame sent by the fifth device.

In a possible implementation, after S603 in which the sixth device receives, in the fifth band, the third frame sent by the fifth device, the frame transmission method shown in FIG. 6 may further include the following step:

The fifth device communicates with the sixth device in the fourth band and the fifth band.

Specifically, the fifth device and the sixth device may perform unidirectional or bidirectional communication in the fourth band and/or the fifth band. Details are not described in this embodiment of this application.

Optionally, the third frame may further carry a TWT wakeup time period. Specifically, that the fifth device communicates with the sixth device in the fourth band and the fifth band may include: The fifth device communicates with the sixth device only in the TWT wakeup time period in the fourth band, so that the fifth device can separately communicate with a plurality of terminals in different time periods, to avoid a conflict.

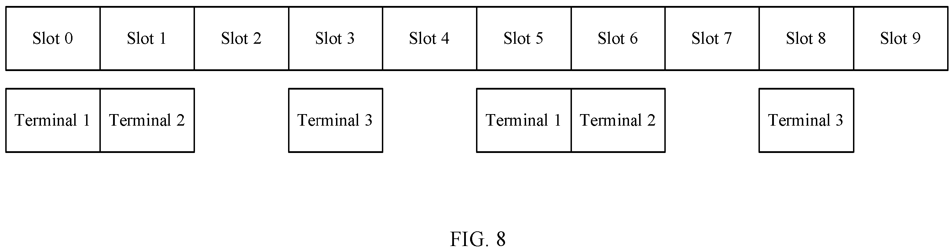

For example, the sixth device is a terminal. As shown in FIG. 8, TWT wakeup time periods allocated by the fifth device to a terminal 1 are a slot 0 and a slot 5, TWT wakeup time periods allocated to a terminal 2 are a slot 1 and a slot 6, and TWT wakeup time periods allocated to a terminal 3 are a slot 3 and a slot 8. In other words, the terminal 1 is limited to communicate with the fifth device only in the slot 0 and the slot 5, the terminal 2 is limited to communicate with the fifth device only in the slot 1 and the slot 6, and the terminal 3 is limited to communicate with the fifth device only in the slot 3 and the slot 8. It may be learned that a slot or a slot set allocated by the fifth device to a terminal is dedicated. That is, there is a one-to-one correspondence between sixth devices and TWT wakeup time periods (TWT wakeup time period sets) allocated to the sixth devices.

It may be understood that the TWT wakeup time period may be aperiodic, for example, valid only in a current radio frame, or may be periodic, for example, valid in each radio frame, until the fifth device delivers cancellation signaling of the TWT wakeup time period.

It should be noted that the TWT wakeup time period is applicable to the unicast TWT scenario, or is applicable to a broadcast TWT scenario. This is not limited in this embodiment of this application.

Certainly, the TWT wakeup time period may include one or more symbols, one or more slots, one or more subframes, or the like. Because the symbol, the slot, and the subframe belong to the prior art, details are not described in this embodiment of this application.

In another possible implementation, the third frame may further carry a RAW group(s) and a RAW time window(s). The RAW group(s) and the RAW time window(s) are in a one-to-one correspondence, and the sixth device belongs to the RAW group. For example, that the fifth device communicates with the sixth device in the fourth band and the fifth band may include:

For the fifth device, if the sixth device successfully accesses the fifth device in a contention manner in the RAW time window in the fourth band, the fifth device receives, in the RAW time window in the fourth band, a data frame sent by the sixth device; and

correspondingly, for the sixth device, if the sixth device successfully accesses the fifth device in a contention manner in the RAW time window in the fourth band, the sixth device sends the data frame to the fifth device in the RAW time window in the fourth band.

Similar to the TWT wakeup time period, the sixth device may also be limited to communicate with the fifth device only in the RAW time window. It should be noted that, different from the TWT wakeup time period, a same RAW time window may include a plurality of terminals, and the plurality of terminals communicate with the fifth device in a channel contention manner. Because the channel contention manner in the RAW scenario belongs to the prior art, details are not described in this embodiment of this application.

In a possible implementation, the fifth device includes a first access point AP module, and the sixth device includes a first station STA module. For example, S602 in which the fifth device sends the third frame to the sixth device in the fifth band may include:

The first AP module sends the third frame to the first STA module in the fifth band.

Correspondingly, S603 in which the sixth device receives, in the fifth band, the third frame sent by the fifth device may include:

The first STA module receives, in the fifth band, the third frame sent by the first AP module.

Optionally, if both the first AP module and the first STA module can support a plurality of bands, after the first STA module receives, in the fifth band, the third frame sent by the first AP module, the frame transmission method shown in FIG. 6 may further include:

The first AP module communicates with the first STA module in the fourth band and the fifth band, so that multiband communication is implemented between the fifth device and the sixth device.

Optionally, if the fifth device further includes a second AP module, the sixth device further includes a second STA module, the first AP module and the first STA module support the fifth band, and the second AP module and the second STA module support the fourth band, after the first STA module receives, in the fifth band, the third frame sent by the first AP module, the frame transmission method shown in FIG. 6 may further include:

The first AP module communicates with the first STA module in the fifth band, and the second AP module communicates with the second STA module in the fourth band, so that the multiband communication is implemented between the fifth device and the sixth device.

For example, the third frame may include a beacon, an explorer frame, and a response frame.

Optionally, if the third frame is a response frame, before S601 in which the fifth device generates the third frame, the frame transmission method shown in FIG. 6 may further include S604 and S605.

S604: The sixth device sends a request frame to the fifth device in the fifth band.

The request frame is used to obtain the radio operation parameters of the fourth band.

S605: The fifth device receives, in the fifth band, the request frame sent by the sixth device.

Because S604 and S605 are similar to S204 and S205, details are not described in this embodiment of this application again.

According to the frame transmission method shown in FIG. 6 in this embodiment of this application, in a band, radio operation parameters of another band in the TWT scenario or the RAW scenario can be scheduled. That is, in the band, radio resources in the two bands can be scheduled in a unified manner, to avoid a problem that a radio resource is idle because of a conflict when a plurality of terminals simultaneously access a same network device, and improve radio resource utilization of the network device and the terminals.

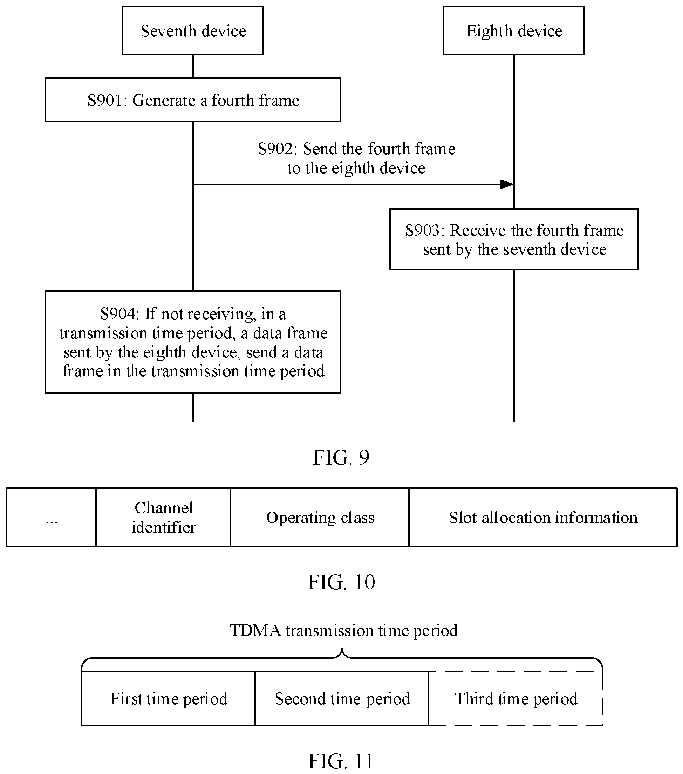

FIG. 9 is a schematic flowchart of a frame transmission method 4 according to an embodiment of this application. As shown in FIG. 9, the method includes S901 to S903.

S901: A seventh device generates a fourth frame.

The fourth frame carries indication information. The indication information is used to indicate a transmission time period scheduled for an eighth device in a time division multiple access TDMA scenario. The transmission time period is used by the seventh device to receive a data frame sent by the eighth device, that is, used by the eighth device to send the data frame to the seventh device.

FIG. 11 is a schematic diagram of a possible frame structure of the fourth frame. For example, as shown in FIG. 11, the fourth frame includes a slot assignment info field, used to carry the indication information used to indicate the TDMA transmission time period.

Optionally, similar to the foregoing frame transmission methods shown in FIG. 2 and FIG. 4, in a band, a TDMA transmission time period in another band may also be scheduled. In view of this, as shown in FIG. 11, the indication information may further include a band identifier of the another band and an operating class index that are respectively carried in a band ID field and an operating class field that are included in the fourth frame.

It may be understood that the seventh device may alternatively separately schedule respective TDMA transmission time periods for a plurality of terminals. Details are not described in this embodiment of this application again.

S902: The seventh device sends the fourth frame to the eighth device.

S903: The eighth device receives the fourth frame sent by the seventh device.

S904: If the seventh device does not receive, in the transmission time period, the data frame sent by the eighth device, the seventh device sends a data frame in the transmission time period.

In a possible implementation, as shown in FIG. 11, the transmission time period may include a first time period and a second time period, and the second time period is later than the first time period. For example, S904 in which if the seventh device does not receive, in the transmission time period, the data frame sent by the eighth device, the seventh device sends the data frame in the transmission time period may include:

The seventh device sends the data frame in the second time period if the seventh device does not receive, in the first time period, the data frame sent by the eighth device.

It should be noted that that the seventh device sends the data frame in the second time period may be that the seventh device sends the data frame to the eighth device in the second time period, or may be that the seventh device sends the data frame to another terminal other than the eighth device in the second time period. This is not limited in this embodiment of this application.

Correspondingly, for the eighth device, after S903 in which the eighth device receives the fourth frame sent by the seventh device, the frame transmission method shown in FIG. 9 may further include:

If the eighth device does not send the data frame to the seventh device in the first time period, the eighth device receives, in the second time period, the data frame sent by the seventh device, to avoid that a radio resource in the second time period is idle, thereby improving radio resource utilization.

Certainly, the seventh device may alternatively send a signaling frame in the second time period. For example, the seventh device may send a signaling frame to one or more terminals in any one of a unicast manner, a broadcast manner, a multicast manner, or the like. The one or more terminals may include the eighth device, or may not include the eighth device. This is not limited in this embodiment of this application.

Optionally, as shown in FIG. 11, if the transmission time period may further include a third time period (because the third time period is optional, the third time period is represented by using a dashed-line box in FIG. 11), and the third time period is later than the second time period, for the seventh device, after that the seventh device sends the data frame in the second time period, the frame transmission method shown in FIG. 9 may further include:

The seventh device receives, in the third time period, an acknowledgement frame of the data frame sent by the seventh device in the second time period.

Correspondingly, if the data frame sent by the seventh device in the second time period is sent to the eighth device, for the eighth device, after that the eighth device receives, in the second time period, the data frame sent by the seventh device, the frame transmission method shown in FIG. 9 may further include:

The eighth device sends, to the seventh device in the third time period, the acknowledgement frame of the data frame sent by the seventh device in the second time period.

The acknowledgement frame may carry acknowledgement (acknowledgement, ACK)/non-acknowledgement (non-acknowledgement, NACK) information of the data frame sent by the seventh device in the second time period, so that the seventh device determines whether to retransmit the data frame, thereby improving data transmission reliability.

It may be understood that that the seventh device sends the data frame in the second time period may be that the seventh device sends the data frame to the eighth device in the second time period, or may be that the seventh device sends the data frame to another device other than the eighth device in the second time period. This is not limited in this embodiment of this application.

It should be noted that FIG. 11 shows only a possible division manner of the TDMA transmission time period. During actual application, there may be another division manner. This is not limited in this embodiment of this application. For example, a same TDMA transmission time period may be separately allocated to different terminals for use.

According to the frame transmission method shown in FIG. 9 in this embodiment of this application, whether a TDMA transmission time period in a direction such as an uplink direction is idle can be monitored, and an idle TDMA transmission time period is used for data transmission in another direction opposite to the foregoing direction, to avoid a case in which the TDMA transmission time period is idle because no data needs to be transmitted, and improve utilization of the idle TDMA transmission time period, thereby improving radio resource utilization.

It may be understood that the foregoing four frame transmission methods may be separately implemented, or may be used in combination. This is not limited in this embodiment of this application.

For example, the radio operation parameters of the second device in the first band may be delivered in the 1st radio frame by using the frame transmission method shown in FIG. 2, the radio operation parameters of the sixth device in the fourth band may be delivered in the 2nd radio frame by using the frame transmission method shown in FIG. 6, the radio operation parameters of the eighth device in the TDMA transmission time period may be delivered in the 3rd radio frame by

using the frame transmission method shown in FIG. 9, and so on.

In this application, multiband devices perform interaction and negotiation in a band 1, to determine a manner in which the multiband devices perform communication in a band 2. The following provides detailed descriptions by using several specific examples.

**Embodiment 1**

According to this embodiment, a TWT-related process and a RAW-related process used for communication in the band 2 may be established in the band 1.

In this embodiment of this application, a multiband access point device and a multiband station device establish the TWT-related process in a first band, and the established TWT-related process works in a second band.

There are the following two manners of communication between multiband devices:

Manner 1: The multiband access point device includes a first access point module (referred to as an AP 1) and a second access point module (referred to as an AP 2). The multiband station device includes a first station module (referred to as a STA 1) and a second station module (referred to as a STA 2). An access point module is configured to implement a related function that can be implemented by an access point, and a station module is configured to implement a related function that can be implemented by a station. The STA 1 may directly communicate with the AP 1 after an association relationship is established. The STA 2 may directly communicate with the AP 2 after an association relationship is established. The two multiband devices implement multiband communication through the communication between the AP 1 and the STA 1 and the communication between the AP 2 and the STA 2.

Manner 2: The multiband access point device includes only an AP 1, and the multiband station device includes only a STA 1. An association relationship is established between the AP 1 and the STA 1, and the AP 1 and the STA 1 may communication with each other in a plurality of bands simultaneously.

A TWT-related process may be classified into a broadcast TWT and a unicast TWT, which are separately described below.

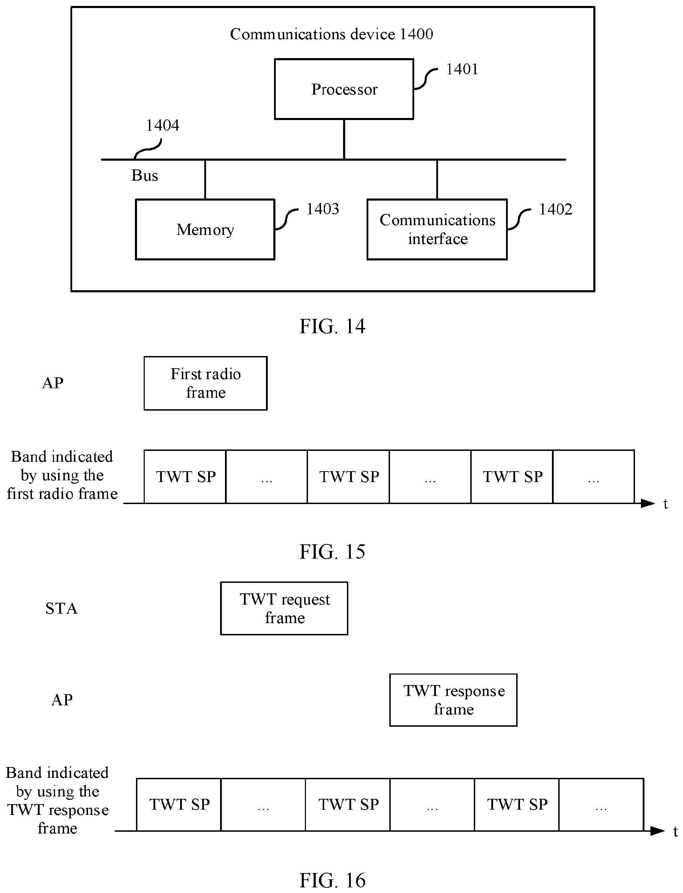

A specific procedure is shown in FIG. 15.

A process of establishing a broadcast TWT is as follows:

Step 1: The AP 1 in the multiband access point device sends a first radio frame for establishing a TWT to the STA 1 in the multiband station device. The first radio frame carries band indication information, and the band indication information is used to indicate a band in which the established broadcast TWT protocol works. The radio frame may be sent by the AP 1 to the STA 1 in a unicast manner, or may be sent by the AP 1 in a broadcast manner.

It should be noted that, in addition to the band indication information, the first radio frame further carries a TWT parameter. The TWT parameter is used to indicate one or more time periods, and the multiband access point device and the multiband station device communicate with each other in the time period. Optionally, it is stipulated that the multiband station device is not allowed to perform sending in the second band beyond the time period. As described above, there are two manners of multiband communication. In the manner 2, the AP 1 and the STA 1 are in an active state (that is, cannot be in a sleep state) in the time period, and may perform sending and receiving operations when there is a service requirement. In the manner 1, the AP 2 and the STA 2 in the multiband devices in which the AP 1 and the STA 1 are located are in an active state in the time period, and may perform sending and receiving operations when there is a service requirement.

Step 2: The STA 1 in the multiband station device receives the first radio frame sent by the AP 1. A time period in which an active state needs to be kept in the band is determined based on the band indication information and the TWT parameter in the first radio frame. In the manner 2, the STA 1 is in an active state in the time period. In the manner 1, the STA 2 in the multiband station device in which the STA 1 is located is in an active state in the time period.

A specific procedure is shown in FIG. 16.

A process of establishing a unicast TWT is as follows:

Step 1: The STA 1 in the multiband station device sends a TWT request frame to the AP 1 in the multiband access point device.

Step 2: The AP 1 sends a TWT response frame to the STA 1, where the TWT response frame carries a TWT parameter and band indication information that are used to determine a time period in which an active state needs to be kept in the band. In the manner 2, the STA 1 is in an active state in the time period. In the manner 1, the STA 2 in the multiband station device in which the STA 1 is located is in an active state in the time period.

It should be noted that the TWT request frame may also carry the TWT parameter and the band indication information, but the finally established TWT is mainly based on the information in the response frame.

For the specific procedure, refer to FIG. 16.

Regardless of whether a TWT is a broadcast TWT or a unicast TWT, the first radio frame, the TWT request frame, and the TWT response frame all need to carry the TWT parameter and the band indication information that may be carried in a TWT parameter information (TWT parameter information, also referred to as a TWT information element, TWT information element) field shown in FIG. 7A or FIG. 7B. However, TWT IEs carried in a broadcast frame and a unicast frame are slightly different, as shown in FIG. 7A and FIG. 7B respectively.

Formats of the TWT IEs to which the band indication information is added are shown in FIG. 7A and FIG. 7B respectively. The band indication information may be the band ID in the figure, may be an operating class, or may include both the two fields.

In addition, the TWT IE may carry a "TWT Channel Index" field, and the TWT channel index field is used to indicate a channel on which the station camps during TWT SP. It should be noted herein that the TWT IE originally includes a "TWT Channel" field in a form of an 8-bit bitmap (bitmap). Each bit in the bitmap is used to indicate a 20 MHz channel in a 160 MHz bandwidth. However, in a next-generation WLAN communications system, a maximum bandwidth may be 320 MHz, and each channel is still 20 MHz. Therefore, 16 bits are required to indicate any channel in a 320 MHz bandwidth. This brings additional overheads of eight bits. Therefore, it is proposed that the "TWT Channel" field be changed to the "TWT Channel Index" field. Eight bits may be used to indicate 256 cases, and only 16 values (for example, 1 to 16) may be used to indicate a 20 MHz channel in the 320 MHz bandwidth, as shown in FIG. 7C.

In addition, the TWT channel index field may exist independently of the band indication information provided in this embodiment, and may also exist in the TWT element together with the band indication information.

A RAW is a technology for grouping STAs and restricting each group of STAs to contend for transmission within a time window of the group of STAs. An AP sends an RPS (RAW Parameter Set) to indicate group information, channel information, and the like. This embodiment of this application proposes that the RPS further needs to carry the band indication information, used to indicate a RAW operation in another band. Specific steps are as follows:

Step 1: The AP 1 in the multiband access point device sends the RPS, where the RPS carries the band indication information, used to indicate a band in which a RAW established by using the RPS works.
Step 2: The STA 1 in the multiband station device receives the RPS.
Step 3: The STA 2 (the manner 1) in the multiband station device performs channel contention in the time window allocated by using the RPS to the STA 1, and sends a data frame after the contention succeeds. Alternatively, the STA 1 (the manner 1) performs channel contention in a time window allocated by using the RPS to the STA 1, and sends a data frame after the contention succeeds.

A structure of a proposed RPS IE is shown in FIG. 7D.

In addition, the RPS may also carry the "Channel Index" field, used to indicate a channel to which the AP 1 allocates the STA 1 (the manner 2) or the STA 2 (the manner 1) to perform the RAW operation. This is similar to the "Channel Number Index" in the TWT element, as shown in FIG. 7E.

**Embodiment 2**

This embodiment provides a communication method for establishing, in the band 1, enhanced TDMA for communication in the band 2.

This embodiment of this application provides an enhanced TDMA scheduling transmission method, including the following steps.

Step 1: An access point allocates a TDMA transmission slot to at least one station, where each slot is allocated to one station.

Step 2: The station determines a start time and an end time of the allocated slot. If the station needs to send data, the station sends the data when the start time arrives, and ensures that an end time of sending a data frame does not exceed the end time of the slot (or does not exceed the end time of the slot minus a fixed time period, where the fixed time period is used to reply with an acknowledgement frame). If the station does not need to send data, the station does not send the data.

Step 3: The AP performs channel monitoring at a start time of each slot. If the AP finds, through the channel monitoring, that a channel is idle, the AP may perform downlink transmission, and ensure that an end time of the downlink transmission does not exceed the end time of the slot (or does not exceed the end time of the slot minus a fixed time period, where the fixed time period is used to reply with an acknowledgement frame).

Further, if the enhanced TDMA scheduling works in the band 1, the scheduling information used by the AP to allocate the slot to the STA may be sent in the band 2. The scheduling information includes band indication information, as shown in FIG. 10.

**Embodiment 3**

In this embodiment, information about the band 2 may be provided for another device by indicating channel location information of the band 2 in the band 1, so that the another device can quickly access or use the band 2.

This embodiment of this application provides a channel indication method in multiband communication. Details are as follows:

A multiband AP may work at both a 2.4 GHz band and a 6 GHz band (or in both a 5 GHz band and a 6 GHz band). The 2.4 GHz band and the 5 GHz band are old bands, and the 6 GHz band is newly added. A bandwidth of the 6 GHz band is about 1 GHz, and a bandwidth of a basic communication channel of Wi-Fi is 20 MHz. Therefore, it may take a quite long time for a station to perform scanning at the 6 GHz band. Therefore, this embodiment of this application proposes that when establishing a BSS at the 2.4 GHz band or the 5 GHz band, the AP broadcasts related information of the AP at the 6 GHz band, so that the station can directly obtain a channel location of a BSS of the AP at 6 GHz when performing scanning at the 2.4 GHz band or the 5 GHz band, thereby directly obtaining, on a corresponding channel, information about a BSS established by the AP at the 6 GHz band.

When the AP establishes the BSS at the 2.4 GHz band or the 5 GHz band, the AP sends a beacon Beacon at the 2.4 GHz band or the 5 GHz band, where the beacon includes an HE operation element, and the HE operation element may include a 6 GHz operation field used to indicate the related information of the BSS at the 6 GHz band. This embodiment of this application proposes that the 6 GHz operation field includes a channel number information field and an operation class information field. An operating class is used to indicate information such as a starting frequency of the 6 GHz band, and a channel number is used to indicate an index number of a primary channel, where the index number uses, as a starting point, the starting frequency indicated by using the operating class, as shown in FIG. 3.

In addition, this embodiment of this application proposes that when the AP establishes the BSS at 6 GHz, the AP may not support operations defined in 802.11n and 802.11ac. Therefore, a beacon sent at the 6 GHz band may not include an HT operation element and a VHT operation element. However, the HT operation element includes a primary channel information field. This embodiment proposes that when the beacon at 6 GHz does not carry the HT operation element, the HE operation element may be used to carry the primary channel information field, used to indicate a location of the primary channel, as shown in FIG. 5.

An embodiment of this application provides an inter-band TWT operation and RAW operation method. A band ID and an operating class are indicated, and a channel index is proposed, to support a 320 MHz channel, to achieve an inter-band resource management effect.

An embodiment of this application provides an enhanced TDMA operation method. If no service occurs in an allocated uplink slot, an AP may directly access a channel and send downlink data, thereby improving resource utilization. In addition, proposed enhanced TDMA may work in different bands, to implement inter-band scheduling transmission.

In this application, apparatuses for implementing the methods in the foregoing embodiments may be obtained with reference to the following content and accompanying drawings.

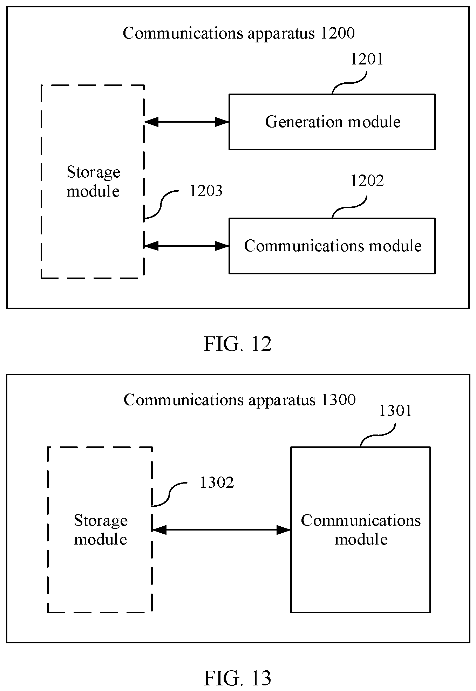

An embodiment of this application provides a communications apparatus, configured to perform the frame transmission method shown in FIG. 2. The communications apparatus serves as a first device to communicate with a second device. As shown in FIG. 12, the communications apparatus includes a generation module 1201 and a communications module 1202.

The generation module 1201 is configured to generate a first frame, where the first frame carries indication information, and the indication information is used to indicate radio operation parameters of a first band.

The communications module 1202 is configured to send the first frame to the second device in a second band.

The communications apparatus may further include a storage module 1203, configured to store an instruction and data.

In a possible implementation, the indication information includes indexes of the radio operation parameters.

Optionally, the indexes of the radio operation parameters are carried in an operating class field in the first frame.

In another possible design, the indication information includes a channel starting frequency and a channel index that are of the first band.

Optionally, the indication information may further include a band identifier of the first band.

For example, the first frame includes a beacon, an explorer frame, and a response frame.

Optionally, the first frame is the response frame.

The communications module 1202 is further configured to receive, in the second band, a request frame sent by the second device, where the request frame is used to obtain the radio operation parameters of the first band.

For example, the communications apparatus may be an access point device in a Wi-Fi system, or may be a chip system installed inside an access point device. This is not limited in this embodiment of this application.

An embodiment of this application provides a communications apparatus, configured to perform the frame transmission method shown in FIG. 2. The communications apparatus serves as a second device to communicate with a first device. As shown in FIG. 13, the communications apparatus includes a communications module 1301.

The communications module 1301 is configured to receive, in a second band, a first frame sent by the first device, where the first frame carries indication information, and the indication information is used to indicate radio operation parameters of a first band.

The communications apparatus may further include a storage module 1302, configured to store an instruction and data.

In a possible implementation, the indication information includes indexes of the radio operation parameters.

Optionally, the indexes of the radio operation parameters are carried in an operating class field in the first frame.

In another possible design, the indication information includes a channel starting frequency and a channel index that are of the first band.

Optionally, the indication information further includes a band identifier of the first band.

In a possible implementation, the first frame includes a beacon, an explorer frame, and a response frame.

Optionally, the first frame is the response frame. The communications module 1301 is further configured to send a request frame to the first device in the second band, where the request frame is used to obtain the radio operation parameters of the first band.

For example, the communications apparatus may be a station or a relay in a Wi-Fi system, or may be a chip system installed inside a station or a relay. This is not limited in this embodiment of this application.

An embodiment of this application provides a communications apparatus, configured to perform the frame transmission method shown in FIG. 4. The communications apparatus serves as a third device to communicate with a fourth device. As shown in FIG. 12, the communications apparatus includes a generation module 1201 and a communications module 1202.

The generation module 1201 is configured to generate a second frame, where the second frame includes a high efficiency operation element field, the high efficiency operation element field is used to carry indication information of a primary channel in a third band, and the indication information is used to indicate radio operation parameters of the primary channel.

The communications module 1202 is configured to send the second frame to a fourth device in the third band.

The communications apparatus may further include a storage module 1203, configured to store an instruction and data.

In a possible implementation, the indication information includes indexes of the radio operation parameters.

In another possible design, the indication information includes a starting frequency and a channel index that are of the primary channel.

Optionally, the second frame does not include a high throughput operation element field.

For example, the second frame includes a beacon, an explorer frame, and a response frame.

Optionally, the second frame is the response frame. The communications module 1202 is further configured to receive, in the third band, a request frame sent by the fourth device, where the request frame is used to obtain the radio operation parameters of the primary channel.

For example, the communications apparatus may be an access point device in a Wi-Fi system, or may be a chip system installed inside an access point device. This is not limited in this embodiment of this application.

An embodiment of this application provides a communications apparatus, configured to perform the frame transmission method shown in FIG. 4. The communications apparatus serves as a fourth device to communicate with a third device. As shown in FIG. 13, the communications apparatus includes a communications module 1301.

The communications module 1301 is configured to receive, in a third band, a second frame sent by a third device, where the second frame includes a high efficiency operation element field, the high efficiency operation element field is used to carry indication information of a primary channel in the third band, and the indication information is used to indicate radio operation parameters of the primary channel.

The communications apparatus may further include a storage module 1302, configured to store an instruction and data.

In a possible implementation, the indication information includes indexes of the radio operation parameters.

In another possible design, the indication information includes a starting frequency and a channel index that are of the primary channel.

Optionally, the second frame does not include a high throughput operation element field.

For example, the second frame includes a beacon, an explorer frame, and a response frame.

Optionally, the second frame is the response frame. The communications module 1301 is further configured to send a request frame to the third device in the third band, where the request frame is used to obtain the radio operation parameters of the primary channel.

For example, the communications apparatus may be a STA in a Wi-Fi system, or may be a chip system installed inside a STA. This is not limited in this embodiment of this application.

An embodiment of this application provides a communications apparatus, configured to perform the frame transmission method shown in FIG. 6. The communications apparatus serves as a fifth device to communicate with a sixth device. The communications apparatus includes a generation module 1201 and a communications module 1202.

The generation module 1201 is configured to generate a third frame, where the third frame carries indication information, and the indication information is used to indicate radio operation parameters of a fourth band in a target wakeup time TWT scenario or a restricted access window RAW scenario.

The communications module 1202 is configured to send the third frame to a sixth device in a fifth band.

The communications apparatus may further include a storage module 1203, configured to store an instruction and data.

In a possible implementation, the indication information includes indexes of the radio operation parameters.

Optionally, the indexes of the radio operation parameters are carried in an operating class field in the third frame.

Optionally, the indication information further includes a band identifier of the fourth band.

In another possible design, the indication information includes a channel index of at least one channel in the fourth band.

Optionally, the channel index of the at least one channel is carried in a channel index field in the third frame.

In a possible implementation, the communications module 1202 is further configured to communicate with the sixth device in the fourth band and the fifth band.

Optionally, the third frame further carries a TWT wakeup time period. The communications module 1202 is further configured to communicate with the sixth device only in the TWT wakeup time period in the fourth band.

Optionally, the third frame further carries a RAW group(s) and a RAW time window(s). The RAW group(s) and the RAW time window(s) are in a one-to-one correspondence, and the sixth device belongs to the RAW group. The communications module 1202 is further configured to: if the sixth device successfully accesses the communications apparatus in a contention manner in the RAW time window in the fourth band, receive, in the RAW time window in the fourth band, a data frame sent by the sixth device.

In a possible implementation, the communications module 1202 includes a first access point AP module, and the sixth device includes a first station STA module.

The first AP module is configured to send the third frame to the first STA module in the fifth band.

Optionally, the first AP module is further configured to communicate with the first STA module in the fourth band and the fifth band.

Optionally, the communications module 1202 further includes a second AP module, and the sixth device further includes a second STA module.

The first AP module is further configured to communicate with the first STA module in the fifth band.

The second AP module is configured to communicate with the second STA module in the fourth band.

For example, the third frame includes a beacon, an explorer frame, and a response frame.

Optionally, the third frame is the response frame. The communications module 1202 is further configured to receive, in the fifth band, a request frame sent by the sixth device, where the request frame is used to obtain the radio operation parameters of the fourth band.

For example, the communications apparatus may be an access point device in a Wi-Fi system, or may be a chip system installed inside an access point device. This is not limited in this embodiment of this application.

An embodiment of this application provides a communications apparatus, configured to perform the frame transmission method shown in FIG. 6. As shown in FIG. 13, the communications apparatus serves as a sixth device to communicate with a fifth device. The communications apparatus includes a communications module 1301.

The communications module 1301 is configured to receive, in a fifth band, a third frame sent by a fifth device, where the third frame carries indication information, and the indication information is used to indicate radio operation parameters of a fourth band in a target wakeup time TWT scenario or a restricted access window RAW scenario.

The communications apparatus may further include a storage module 1302, configured to store an instruction and data.

In a possible implementation, the indication information includes indexes of the radio operation parameters.

Optionally, the indexes of the radio operation parameters are carried in an operating class field in the third frame.

Optionally, the indication information further includes a band identifier of the fourth band.

In another possible implementation, the indication information includes a channel index of at least one channel in the fourth band.

Optionally, the channel index of the at least one channel is carried in a channel index field in the third frame.

Optionally, the communications module 1301 is further configured to communicate with the fifth device in the fourth band and the fifth band.

In a possible implementation, the third frame further carries a TWT wakeup time period.

The communications module 1301 is further configured to communicate with the fifth device only in the TWT wakeup time period in the fourth band.

In another possible implementation, the third frame further carries a RAW group(s) and a RAW time window(s). The RAW group(s) and the RAW time window(s) are in a one-to-one correspondence. The communications apparatus belongs to a RAW group.

The communications module 1301 is further configured to: if the communications apparatus successfully accesses the fifth device in a contention manner in the RAW time window in the fourth band, send the data frame to the fifth device in the RAW time window in the fourth band.

In a possible implementation, the fifth device includes a first access point AP module, and the communications module 1301 includes a first station STA module.

The first STA module is configured to receive, in the fifth band, the third frame sent by the first AP module.

Optionally, the first STA module is further configured to communicate with the first AP module in the fourth band and the fifth band.

Optionally, the fifth device further includes a second AP module, and the communications apparatus further includes a second STA module.

The first STA module is further configured to communicate with the first AP module in the fifth band.

The second STA module is configured to communicate with the second AP module in the fourth band.

For example, the third frame includes a beacon, an explorer frame, and a response frame.

Optionally, the third frame is the response frame. The communications module 1301 is further configured to send a request frame to the fifth device in the fifth band, where the request frame is used to obtain the radio operation parameters of the fourth band.

For example, the communications apparatus may be a station or a relay in a Wi-Fi system, or may be a chip system installed inside a station or a relay. This is not limited in this embodiment of this application.

An embodiment of this application provides a communications apparatus, configured to perform the frame transmission method shown in FIG. 9. As shown in FIG. 12, the communications apparatus serves as a seventh device to communicate with an eighth device. The communications apparatus includes a generation module 1201 and a communications module 1202.

The generation module 1201 is configured to generate a fourth frame, where the fourth frame carries indication information, the indication information is used to indicate a transmission time period scheduled for an eighth device in a time division multiple access TDMA scenario, and the transmission time period is used by the communications module to receive a data frame sent by the eighth device.

The communications module 1202 is configured to send the fourth frame to the eighth device.

The communications module 1202 is further configured to send a data frame in the transmission time period if the communications module does not receive, in the transmission time period, the data frame sent by the eighth device.

The communications apparatus may further include a storage module 1203, configured to store an instruction and data.

In a possible implementation, the communications module 1202 is further configured to send the data frame in a second time period if the communications module 1202 does not receive, in a first time period, the data frame sent by the eighth device.

Optionally, the transmission time period further includes a third time period, and the third time period is later than the second time period. The communications module 1202 is further configured to receive, in the third time period, an acknowledgement frame of the data frame sent by the communications module 1202 in the second time period.

For example, the communications apparatus may be an access point device in a Wi-Fi system, or may be a chip system installed inside an access point device. This is not limited in this embodiment of this application.

An embodiment of this application provides a communications apparatus, configured to perform the frame transmission method shown in FIG. 9. As shown in FIG. 13, the communications apparatus serves as an eighth device to communicate with a seventh device. The communications apparatus includes a communications module 1301.

The communications module 1301 is configured to receive a fourth frame sent by a seventh device, where the fourth frame carries indication information, the indication information is used to indicate a transmission time period scheduled for the communications apparatus in a time division multiple access TDMA scenario, and the transmission time period is used by the communications module 1301 to send a data frame to the seventh device.

The communications apparatus may further include a storage module 1302, configured to store an instruction and data.

In a possible implementation, the transmission time period includes a first time period and a second time period, and the second time period is later than the first time period. The communications module 1301 is further configured to receive, in the second time period if the communications module 1301 does not send the data frame to the seventh device in the first time period, a data frame sent by the seventh device.

Optionally, the transmission time period further includes a third time period, and the third time period is later than the second time period.

The communications module 1301 is further configured to send, in the third time period to the seventh device, an acknowledgement frame of the data frame sent by the seventh device in the second time period.

For example, the communications apparatus may be a station or a relay in a Wi-Fi system, or may be a chip system installed inside a station or a relay. This is not limited in this embodiment of this application.

An embodiment of this application provides a communications device, configured to perform a function performed by any one of the first device, the third device, the fifth device, or the seventh device, or configured to perform a function performed by any one of the second device, the fourth device, the sixth device, or the eighth device. FIG. 14 is a possible schematic structural diagram of a communications device in the foregoing method embodiments.

As shown in FIG. 14, the communications device includes a processor 1401 and a communications interface 1402. The processor 1401 is configured to control and manage an action of the first device, for example, performing a step performed by the storage module 1203 or the storage module 1302, and/or is configured to perform another process of the technology described in this specification. The communications interface 1402 is configured to support the first device in communicating with another network entity, for example, in performing a step performed by the communications module 1202 or the communications module 1301. In addition, the first device may further include a memory 1403 and a bus 1404. The memory 1403 is configured to store program code and data that are in the first device.

The processor 1401 may be a processor or a controller in the first device. The processor or the controller may implement or execute various example logical blocks, modules, and circuits described with reference to content disclosed in this application. The processor or the controller may be a central processing unit, a general purpose processor, a digital signal processor, an application specific integrated circuit, a field programmable gate array or another programmable logic device, a transistor logic device, a hardware component, or any combination thereof. The processor or the controller may implement or execute various example logical blocks, modules, and circuits described with reference to content disclosed in this application. Alternatively, the processor may be a combination of processors implementing a computing function, for example, a combination of one or more microprocessors or a combination of the DSP and a microprocessor.

The communications interface 1402 may be a transceiver, a transceiver circuit, a communications interface, or the like in the first device.

The memory 1403 may be a memory or the like in the first device. The memory may include a volatile memory such as a random access memory. The memory may alternatively include a nonvolatile memory such as a read-only memory, a flash memory, a hard disk, or a solid-state drive. The memory may alternatively include a combination of the foregoing types of memories.

The bus 1404 may be an extended industry standard structure (extended industry standard architecture, EISA) bus or the like. The bus 1404 may be classified into an address bus, a data bus, a control bus, and the like. For ease of representation, only one thick line is used to represent the bus in FIG. 14, but this does not mean that there is only one bus or only one type of bus.

This application further provides a communications system, including the foregoing one or more network devices and one or more terminals.

It should be understood that, the processor in the embodiments of this application may be a central processing unit (central processing unit, CPU), or may be another general purpose processor, a digital signal processor (digital signal processor, DSP), an application specific integrated circuit (application specific integrated circuit, ASIC), a field programmable gate array (field programmable gate array, FPGA), or another programmable logic device, a discrete gate or a transistor logic device, a discrete hardware component, or the like. The general purpose processor may be a microprocessor, or the processor may be any conventional processor or the like.

It should be further understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used to implement the embodiments, the foregoing embodiments may be implemented completely or partially in a form of a computer program product. The computer program product includes one or more computer instructions or computer programs. When the program instructions or the computer programs are loaded and executed on a computer, the procedure or functions according to the embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually represents an "or" relationship between the associated objects, or may represent an "and/or" relationship. A specific meaning depends on a context.

In this application, "at least one" refers to one or more, and "a plurality of" refers to two or more. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the foregoing apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A frame transmission method, comprising:

   receiving, by a first device in a second band, a request frame sent by a second device, wherein the request frame is used to obtain radio operation parameters of the first band, and the radio operation parameters are used to determine a radio resource in the first band;
   generating, by the first device, a first frame, wherein the first frame is used to indicate radio operation parameters of the first band, the radio operation parameters comprise a target wakeup time, TWT, parameter, the TWT parameter is used to determine a time period in which an active state is kept in the first band; and
   sending, by the first device, the first frame to a second device in the second band.

2. The frame transmission method according to claim 1, wherein the indication information comprises indexes of the radio operation parameters.

3. The frame transmission method according to claim 2, wherein the indexes of the radio operation parameters are carried in an operating class field in the first frame.

4. The frame transmission method according to claim 1, wherein the indication information comprises a channel starting frequency and a channel index that are of the first band.

5. The frame transmission method according to any one of claims 2 to 4, wherein the indication information further comprises a band identifier of the first band.

6. The frame transmission method according to any one of claims 1 to 5, wherein the first frequency band and the second frequency band are of different frequencies.

7. The frame transmission method according to any one of claims 1 to 6, wherein the first frame is used to indicate radio operation parameters of the first band, which comprises:
   the first frame carries indication information, and the indication information is used to indicate the radio operation parameters of the first band.

8. A frame transmission method, comprising:

   sending, by a second device in a second band, a request frame to a first device, wherein the request frame is used to obtain radio operation parameters of the first band, and the radio operation parameters are used to determine a radio resource in the first band; and
   receiving, by the second device in the second band, a first frame sent by a first device, wherein the first frame is used to indicate radio operation parameters of the first band, the radio operation parameters comprise a target wakeup time, TWT, parameter, the TWT parameter is used to determine a time period in which an active state is kept in the first band.

9. The frame transmission method according to claim 8, wherein the indication information comprises indexes of the radio operation parameters.

10. The frame transmission method according to claim 9, wherein the indexes of the radio operation parameters are carried in an operating class field in the first frame.

11. The frame transmission method according to claim 8, wherein the indication information comprises a channel starting frequency and a channel index that are of the first band.

12. The frame transmission method according to any one of claims 9 to 11, wherein the indication information further comprises a band identifier of the first band.

13. The frame transmission method according to any one of claims 8 to 12, wherein the first frequency band and the second frequency band are of different frequencies.

14. The frame transmission method according to any one of claims 8 to 13, wherein the first frame is used to indicate radio operation parameters of the first band, which comprises:
the first frame carries indication information, and the indication information is used to indicate the radio operation parameters of the first band.

15. A communications apparatus, wherein the communications apparatus serves as a first device or a second device, and the communications apparatus is configured to perform the steps in any one of claims 1 to 14.

FIG. 1

FIG. 2

| | Beacon | |
|---|---|---|

| ... | High efficiency operation information element | ... |
|---|---|---|

| ... | 6 GHz operation field | ... |
|---|---|---|

| ... | Channel number | Operation type | ... |
|---|---|---|---|

FIG. 3

| Third device | Fourth device |
|---|---|

S404: Send a request frame to the
third device in a third band

S405: Receive, in the third band, the
request frame sent by the fourth device

S401: Generate a second frame

S402: Send the second frame to the
fourth device in the third band

S403: Receive, in the third band, the
second frame sent by the third device

FIG. 4

| | Beacon | |
| :---: | :---: | :---: |
| ... | High efficiency operation information element | ... |
| ... | Primary channel | ... |

FIG. 5

```
  ┌──────────────┐                      ┌──────────────┐
  │  Fifth device │                      │  Sixth device │
  └──────────────┘                      └──────────────┘
```

S604: Send a request frame to the
fifth device in a fifth band

S605: Receive, in the fifth band, the
request frame sent by the sixth device

S601: Generate a third frame

S602: Send the third frame to the
sixth device in the fifth band

S603: Receive, in the fifth band, the
third frame sent by the fifth device

FIG. 6

| Element identifier | Length | Control | TWT parameter information |
|---|---|---|---|

| Decimal part of a TWT wakeup spacing | TWT channel | NDP paging | Band identifier | Operation type |
|---|---|---|---|---|

FIG. 7A

| Element identifier | Length | Control | TWT parameter information |
|---|---|---|---|

| Broadcast TWT information | Band identifier | Operation type |
|---|---|---|

FIG. 7B

| Element identifier | Length | Control | TWT parameter information |
|---|---|---|---|

| ... | Decimal part of a TWT wakeup spacing | TWT channel index | NDP paging |
|---|---|---|---|

FIG. 7C

| Element identifier | Length | RAW allocation |
|---|---|---|

| RAW group | Channel indication | Periodic channel parameter | NDP paging | Channel identifier | Operation type |
|---|---|---|---|---|---|

| Channel activity bitmap | Maximum transmission width | ... |
|---|---|---|

FIG. 7D

| Element identifier | Length | RAW allocation |
|---|---|---|

| RAW group | Channel indication | Periodic channel parameter | NDP paging |
|---|---|---|---|

| Channel index | Maximum transmission width | ... |
|---|---|---|

FIG. 7E

| Slot 0 | Slot 1 | Slot 2 | Slot 3 | Slot 4 | Slot 5 | Slot 6 | Slot 7 | Slot 8 | Slot 9 |
|--------|--------|--------|--------|--------|--------|--------|--------|--------|--------|

| Terminal 1 | Terminal 2 | | Terminal 3 | | Terminal 1 | Terminal 2 | | Terminal 3 | |

FIG. 8

Seventh device

Eighth device

S901: Generate a fourth frame

S902: Send the fourth frame
to the eighth device

S903: Receive the fourth frame
sent by the seventh device

S904: If not receiving, in a
transmission time period, a data frame
sent by the eighth device, send a data
frame in the transmission time period

FIG. 9

| ... | Channel identifier | Operating class | Slot allocation information |
|-----|-----|-----|-----|

FIG. 10

TDMA transmission time period

| First time period | Second time period | Third time period |
|-----|-----|-----|

FIG. 11

Communications apparatus 1200

1201

Generation module

Storage module

1203

1202

Communications module

FIG. 12

Communications apparatus 1300

1301

1302

Storage module

Communications module

FIG. 13

Communications device 1400

Processor ⌐ 1401

1404

Bus

Memory ⌐ 1403

Communications interface ⌐ 1402

FIG. 14

AP

First radio frame

Band indicated by using the first radio frame

| TWT SP | ... | TWT SP | ... | TWT SP | ... |

→ t

FIG. 15

STA

TWT request frame

AP

TWT response frame

Band indicated by using the TWT response frame

| TWT SP | ... | TWT SP | ... | TWT SP | ... |

→ t

FIG. 16

**EP 4 770 237 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810998104